# EUROPÄISCHE PATENTANMELDUNG

(11) **EP 1 993 027 A1**
(43) Veröffentlichungstag der Anmeldung: **19.11.2008**
(21) Anmeldenummer: 07021774.0
(22) Anmeldetag: 09.11.2007
(51) Int. Cl.: G06F 3/048

(54) **Elektronische Anzeigeeinrichtung und Verfahren zum Betrieb einer Anzeigeeinrichtung**

(30) Priorität: 16.05.2007 DE 102007023313
(71) Anmelder: Navigon AG, 20251 Hamburg (DE)
(72) Erfinder: Englerth, Harald, 97080 Würzburg (DE)
(74) Vertreter: von den Steinen, Axel

(57) **Zusammenfassung**

Die Erfindung betrifft eine Anzeigeeinrichtung (02) und ein Verfahren zum Betrieb einer elektronischen Anzeigeeinrichtung (02) zur Anzeige mehrerer Zeichen eines Zeichensatzes(03, 06, 09), insbesondere zur Anzeige von Buchstaben und/oder Ziffern. Zumindest ein Zeichen des Zeichensatzes kann durch Betätigen einer Anwahleinrichtung (04) angewählt und durch Betätigen einer Auswahleinrichtung (05) zur Weiterverarbeitung ausgewählt werden. Die Zeichen werden dabei auf einer gekrümmten Bogenlinie angeordnet und angezeigt.

## Beschreibung

Die Erfindung betrifft eine elektronische Anzeigeeinrichtung nach dem Oberbegriff des Anspruchs 1.

Weiter betrifft die Erfindung ein Verfahren zum Betrieb einer derartigen Anzeigeeinrichtung nach dem Oberbegriff des Verfahrenshauptanspruchs.

Gattungsgemäße Anzeigeeinrichtungen finden bei einer Vielzahl von elektronischen Geräten, beispielsweise Mobiltelefonen, Musikabspielgeräten, tragbaren Kleincomputern, DVD/Video-Rekordern, Digitalkameras Verwendung. Insbesondere sind derartige Anzeigeeinrichtungen auch bei tragbaren oder fest eingebauten Navigationsgeräten vorgesehen.

Zur Bedienung der Geräte ist dabei vielfach die Eingabe von bestimmten Daten erforderlich, insbesondere die Eingabe von Buchstaben und Zahlen. Die einzugebenden Zeichen werden bei den gattungsgemäßen Geräten dabei in der Art einer virtuellen Tastatur an der Anzeigeeinrichtung angezeigt. Für die Anzeige der Zeichen auf der Anzeigeeinrichtung sind aus dem Stand der Technik verschiedene Konzepte bekannt.

Die DE 100 25 126 A1 beschreibt ein Verfahren zur zeichenweisen Eingabe eines Suchbegriffs in ein Kommunikationssystem eines Kraftfahrzeugs. Der dabei vorhandene Zeichensatz, der alle Buchstaben des Alphabets und alle arabischen Ziffern umfasst, wird dabei als linearer Zeichenstrahl angezeigt. Die Anzeige als linearer Zeichenstrahl hat dabei den Nachteil, dass das Ende und der Anfang der Zeichenstrahlliste relativ weit auseinander liegen, so dass der Bediener entsprechend lange benötigt, um sich vom Anfang der Liste bis zum Ende der Liste zu bewegen. Außerdem ist zur Anzeige der gesamten Liste ein relativ großer Platz auf der Anzeigeeinrichtung erforderlich, weshalb bei derartigen Anzeigekonzepten vielfach eine Verkleinerung der Schrift unumgänglich ist.

Die DE 37 12 360 A1 beschreibt ebenfalls ein Verfahren und eine Vorrichtung zur Auswahl und Eingabe des Ziels bei einem Navigationssystem in einem Kraftfahrzeug. Die Anzeige der auszuwählenden Zeichen erfolgt dabei in Abhängigkeit bestimmter Wahrscheinlichkeitskriterien, wobei die anzuzeigenden Zeichen in horizontalen und vertikalen Zeichenketten angezeigt werden können. Die hier beschriebene Anzeigestrategie hat den Nachteil, dass nicht ersichtlich ist, welche Buchstaben insgesamt zur Auswahl bereitstehen. Außerdem ist eine intuitive Benutzung nicht möglich, da die Wahrscheinlichkeitskriterien für den Benutzer nicht durchschaubar sind.

Die EP 0 882 259 B1 beschreibt eine alphanumerische Tastatur (ABC-Tastatur), bei der die auszuwählenden Zeichen in einem rechteckigen Zeichenfeld in Zeilen und Spalten angeordnet sind. Diese Art der Anzeige hat den Nachteil, dass keine intuitive Auffindung der Zeichen möglich ist, sondern auch nach sehr langem Gebrauch der Tastatur immer noch Buchstaben und Ziffern gesucht werden müssen. Außerdem ist zur Anwahl und Auswahl der Zeichen eine aufwendige Tastatur erforderlich.

Ausgehend von diesem Stand der Technik ist es deshalb Aufgabe der vorliegenden Erfindung, eine neue elektronische Anzeigeeinrichtung zur Anzeige mehrerer Zeichen eines Zeichensatzes, insbesondere zur Anzeige von Buchstaben und/oder Ziffern, vorzuschlagen. Weiterhin ist es Aufgabe der vorliegenden Erfindung, ein Verfahren zum Betrieb einer derartigen Anzeigeeinrichtung vorzuschlagen.

Diese Aufgabe wird durch eine Anzeigeeinrichtung bzw. ein Verfahren nach der Lehre der beiden unabhängigen Hauptansprüche gelöst.

Vorteilhafte Ausführungsformen der Erfindung sind Gegenstand der Unteransprüche.

Die Erfindung beruht auf dem Grundgedanken, dass die anzuzeigenden Zeichen nicht wie bisher aus dem Stand der Technik auf einer geraden Linie angeordnet werden, sondern die Anordnung entlang einer gekrümmten Bogenlinie erfolgt. Durch die Anordnung auf einer Bogenlinie wird die intuitive Benutzung bei der An- und Auswahl der Zeichen unterstützt. Außerdem kann der auf der Anzeigeeinrichtung vorhandene Platz effektiver genutzt werden.

Die geometrische Form der gekrümmten Bogenlinie ist prinzipiell beliebig. So kann es sich um regelmäßige oder unregelmäßige Bogenformen handeln. Bevorzugt werden die anzuzeigenden Zeichen auf einem Kreisbogenabschnitt, insbesondere auf einer geschlossenen Kreislinie, angezeigt.

Alternativ zur Anordnung der anzuzeigenden Zeichen auf einem Kreisbogenabschnitt bzw. auf einer geschlossenen Kreislinie kann die Anordnung auch auf einer Spirallinie erfolgen. Die spiralförmige Anordnung hat dabei den Vorteil, dass die Zeichen jeweils mehr als zwei Nachbarn haben. Dies sind jeweils die zwei benachbarten Zeichen vor und hinter dem Zeichen auf der Spirallinie. Außerdem sind auch die Zeichen benachbart, die auf benachbarten Spirallinienabschnitten liegen. Gerade bei sehr großen Zeichensätzen, beispielsweise japanischen Schriftzeichen, kann der Benutzer sich sehr schnell und intuitiv von einem Zeichen zum nächsten Zeichen bewegen, indem er sich entweder linear entlang der Spirallinie oder quer zwischen benachbarten Spirallinienabschnitten bewegt.

Dient der angezeigte Zeichensatz zur Eingabe von Daten in ein Gerät, beispielsweise zur Eingabe von Zieldaten in ein Navigationsgerät, so müssen zur Bildung von einzugebenden Zeichenketten nacheinander die gewünschten Zeichen selektiert werden. Ist die Anzeigeeinrichtung in der Art eines berührungssensitiven Bildschirms (Touch-Screen) ausgebildet, so kann die Selektion direkt durch Antippen des entsprechenden Zeichens erfolgen. Soll die Selektion dagegen über entsprechende Betätigungselemente, beispielsweise Tasten, erfolgen, so ist es zur Einsparung von Bauraum prinzipiell sinnvoll, nicht jedem einzelnen Zeichen ein Betätigungselement, beispielsweise eine Taste, unmittelbar zuzuordnen. Um dies zu ermöglichen, kann zu der eigentlichen Auswahl des Zeichens eine Zeichenanwahl vorgeschaltet werden. Dies bedeutet, dass mit einer Anwahleinrichtung zunächst ein Zeichen aus dem angezeigten Zeichensatz angewählt wird. Die Anwahl kann dabei beispielsweise durch Drücken eines Wippschalters erfolgen. Dabei ist es besonders vorteilhaft, wenn das jeweils angewählte Zeichen hervorgehoben dargestellt wird, um dem Benutzer zu verdeutlichen, welches Zeichen aktuell angewählt ist. Als Anwahleinrichtungen kommen dabei insbesondere Wippschalter oder Joysticks in Frage.

Sobald das angewählte Zeichen des Zeichensatzes mit dem vom Benutzer gewünschten Zeichen übereinstimmt, kann dann eine Auswahleinrichtung, beispielsweise ein Druckschalter, betätigt werden. Durch die Auswahl mittels der Auswahleinrichtung wird das angewählte Zeichen zur Weiterverarbeitung übernommen, und es kann das nächste Zeichen angewählt und anschließend durch Betätigung der Auswahleinrichtung selektiert werden.

Zur weiteren Vereinfachung des gerätetechnischen Aufwands ist es besonders vorteilhaft, wenn Anwahleinrichtung und Auswahleinrichtung in einem einzigen Schaltelement kombiniert sind. Dazu haben sich insbesondere Schalter mit Dreh-Drück-Mechanismus als geeignet erwiesen. Durch Drehen des Schalters wird zunächst die Anwahleinrichtung realisiert und durch Drücken des Schalters dann die Auswahl getroffen.

Je mehr Zeichen ein einzelner Zeichensatz enthält, desto größer ist der maximale Abstand zwischen zwei Zeichen, wodurch die maximale Zeit zur Bewegung zwischen zwei Zeichen entsprechend verlängert wird. Um den maximalen Abstand zwischen zwei Zeichen eines Zeichensatzes zu begrenzen, ist es deshalb besonders vorteilhaft, wenn zumindest zwei voneinander unabhängige Zeichensätze vorgesehen sind. Durch Umschalten einer Umschalteinrichtung kann dann zwischen den einzelnen Zeichensätzen hin- und hergeschaltet werden.

Welche Zeichen in den einzelnen Zeichensätzen zusammengefasst sind, ist grundsätzlich beliebig. Besonders vorteilhaft ist es, wenn zumindest ein Zeichensatz alle Buchstaben des Alphabets, insbesondere in geordneter alphabetischer Reihenfolge, enthält. Ein zweiter Zeichensatz kann die Ziffern der arabischen Zahlen (0, 1, 2, 3, 4, 5, 6, 7, 8 und 9) enthalten. Ein weiterer Zeichensatz kann für Sonderzeichen, insbesondere Umlaute, vorgesehen werden.

Bestimmte Zeichen und Funktionen können auch mehrfach in den einzelnen Zeichensätzen vorgesehen sein. Dies gilt insbesondere für das Leerzeichen, um einzelne Zeichenketten voneinander zu trennen, bzw. für das Zeichen für die Löschfunktion. Das Zeichen für die Löschfunktion ermöglicht es, durch seine Betätigung ein in der Zeichenkette davor oder dahinter liegendes Zeichen wieder zu löschen. Außerdem kann des Punktzeichen zur Kennzeichnung eines Satzendes und/oder ein @-Zeichen und/oder ein Returnzeichen als Bestätigungzeichen oder Zeilenumbruch mehrfach in den einzelnen Zeichensätzen vorkommen. Weitere Gleichzeichen sind selbstverständlich denkbar. Die Zeichen, die häufig gebraucht werden, können in den verschiedenen Zeichensätzen auftauchen und dadurch eine Überschneidung zwischen den Zeichensätzen bilden. Alternativ oder additiv dazu können einzelne Zeichen in den einzelnen Zeichensätzen auch mehrfach angezeigt werden, um diese Zeichen von jedem anderen Zeichen des Zeichensatzes möglichst schnell erreichen zu können.

In der einfachsten Form werden die verschiedenen Zeichensätze jeweils einzeln und unabhängig voneinander angezeigt. Eine besonders schnelle und intuitive Bedienung wird ermöglicht, wenn die verschiedenen Zeichensätze gleichzeitig angezeigt werden können. Dazu können die verschiedenen Zeichensätze insbesondere auf konzentrischen Kreisen angeordnet werden, um den auf der Anzeigeeinrichtung vorhandenen Platz optimal zu nutzen. Die konzentrische Anordnung hat dabei den ähnlichen Vorteil wie die spiralförmige Anordnung, wonach die Zeichen jeweils mehr als zwei Nachbarn haben. Dies sind jeweils die zwei benachbarten Zeichen vor und hinter dem Zeichen auf dem Kreisbogen. Außerdem sind auch die Zeichen benachbart, die auf dem nächstinneren und nächstäußeren Zeichensatz liegen.

In welcher Art von elektronischem Gerät die erfindungsgemäße Anzeigeeinrichtung verwendet wird, ist grundsätzlich beliebig. Besonders große Vorteile bietet die Anzeigeeinrichtung bei Navigationssystemen, da die Auswahl und/oder Eingabe von Zielen, wie sie bei der Bedienung von Navigationssystemen unumgänglich ist, die Eingabe langer Zeichenketten unumgänglich macht. Die Eingabe dieser langen Zeichenketten zur Beschreibung des Ziels, beispielsweise des Ortsnamens, des Straßennamens und der Hausnummer, wird durch die erfindungsgemäße Anzeigeeinrichtung erheblich erleichtert und eine intuitive Bedienung ermöglicht.

Die Anzeigeeinrichtung kann auch eine berührungssensitive Oberfläche aufweisen, d.h. in der Art eines Touch-Screens ausgebildet sein. Durch Berührung der Oberfläche im Bereich eines angezeigten Zeichens kann dieses Zeichen direkt ausgewählt werden, und eine vorherige Anwahl des Zeichens entfällt dann. Der Touch-Screen kann auch mit anderen Bedienungselementen, beispielsweise Tasten, kombiniert werden.

Das erfindungsgemäße Verfahren zum Betrieb der Anzeigeeinrichtung beruht ebenfalls auf dem Grundgedanken, die anzuzeigenden Zeichen auf einer gekrümmten Bogenlinie anzuordnen und derart anzuzeigen. Insbesondere kann die Bogenlinie dabei als Kreisbogenabschnitt, Kreislinie oder Spirallinie ausgebildet sein.

Um bei Geräten, bei denen nicht jedem Zeichen der virtuellen Tastatur ein einzelnes Betätigungselement zugeordnet ist, die Bedienung intuitiv zu erleichtern, kann nach einer bevorzugten Verfahrensvariante ein Anwahlfokus vorhanden sein. Im Anwahlfokus befindet sich dabei immer ein Zeichen, das damit als angewählt gilt und durch Betätigung einer weiteren Auswahleinrichtung selektiert werden kann. Durch Betätigung der dem Anwahlfokus zugeordneten Anwahleinrichtung kann der Anwahlfokus relativ über die Zeichen des Zeichensatzes bewegt werden. Es ist für das Verfahren sowohl möglich, dass nach Auswahl eines Buchstabens der Anwahlfokus auf dem gleichen Buchstaben stehen bleibt oder immer wieder auf den ersten Buchstaben des Zeichensatzes (z.B. A oder 1) zurückspringt. Letzteres ist insbesondere für das Verfahren mit feststehendem Auswahlfokus vorteilhaft, da dadurch ein Systemfeedback an den Nutzer erreicht wird.

Die spezielle Anzeige des Anwahlfokus ist nicht unbedingt erforderlich. Beispielsweise kann auch ein bestimmter Platz auf der Anzeigeeinrichtung, beispielsweise immer das zuoberst angezeigte Zeichen, als Anwahlfokus dienen. Um die Erkennbarkeit des Anwahlfokus zu erhöhen, kann das angewählte Zeichen jeweils hervorgehoben an der Anzeigeeinrichtung dargestellt werden. Beispielsweise kann dazu ein Lupensymbol eingeblendet werden, unter dem das angewählte Zeichen symbolisch vergrößert dargestellt ist.

Zur weiteren Erhöhung der Erkennbarkeit des angewählten Zeichens kann das angewählte Zeichen außerdem zusätzlich noch ein zweites Mal angezeigt werden. Bildet der angezeigte Zeichensatz beispielsweise eine Kreisform, so kann das jeweils aktuell angewählte Zeichen in der Mitte dieses Kreises nochmals eingeblendet werden.

Bei der Relativbewegung des Anwahlfokus relativ zu den Zeichen des Zeichensatzes ergeben sich zwei unterschiedliche Anzeigestrategien. Gemäß der ersten Anzeigestrategie steht der Anwahlfokus fest, und durch Betätigung der Anwahleinrichtung werden die Zeichen des Zeichensatzes relativ zu dem feststehenden Anwahlfokus bewegt. Wenn mehrere Zeichensätze gleichzeitig angezeigt werden, beispielsweise als konzentrische Kreise, können sich entweder alle Zeichensätze mitbewegen, oder es wird nur der aktivierte Zeichensatz bewegt und die anderen Zeichensätze bleiben stehen. Die erste Variante hat den Vorteil, dass die vertikal benachbarten Zeichen immer identisch wären. Die zweite Variante ist insbesondere für den Fall von Vorteil, dass nach Auswahl und Übernahme eines Zeichens der Zeichensatz wieder auf die Ausgangsposition springt. Dieses Verfahren ist von Vorteil, da z.B. bei Aktivierung des Sonderzeichen-Zeichensatzringes das am häufigsten verwendete Zeichen (je nach Anwendungsfall z.B. Punkt, Leerzeichen, Komma) standardmäßig als erstes im Auswahlfokus erscheint und ohne Verzögerung ausgewählt werden kann.

In der Einfachform wird durch die Betätigung der Anwahleinrichtung, beispielsweise durch Tastendruck auf eine entsprechend vorgesehene Taste, jeweils von einem Zeichen zum jeweils benachbarten Zeichen gesprungen. Alternativ bzw. additiv dazu kann es auch vorgesehen sein, dass bei Betätigung der Anwahleinrichtung eine bestimmte Anzahl von Zeichen übersprungen wird und ein entsprechend weiter entferntes Zeichen angewählt wird. Dies ist insbesondere dann von Vorteil, wenn verschiedene Anwahleinrichtungen zur Verfügung gestellt werden können. Bei Musikabspielgeräten ist es beispielsweise denkbar, dass die Vorspultasten jeweils Einzelsprünge bei der Anwahl zwischen den Zeichen symbolisieren, wohingegen die Schnellspul- oder Kapitelspultaste jeweils größere Sprünge über mehrere Zeichen hinweg symbolisiert.

Um eine besonders schnelle und effektive Anwahl der verschiedenen Zeichen zu ermöglichen, ist es besonders vorteilhaft, wenn diese entsprechend einer geschlossenen Ringstruktur geordnet sind. Dies bedeutet mit anderen Worten, dass das erste Zeichen des Zeichensatzes benachbart zum letzten Zeichen des Zeichensatzes angeordnet ist. Damit wird ermöglicht, dass bei Betätigung der Anwahleinrichtung direkt vom ersten Zeichen zum letzten Zeichen gesprungen werden kann. Die erforderlichen Anwahlzeiten werden dadurch erheblich reduziert.

Falls an der Anzeigeeinrichtung nicht ausreichend Platz zur Darstellung des gesamten Zeichensatzes vorhanden ist, ist es auch möglich, dass jeweils nur ein Teil des Zeichensatzes angezeigt wird. Die Anordnung der Zeichen auf einer Bogenlinie ermöglicht es dann dabei, dass der Benutzer, obwohl er nicht alle Zeichen des Zeichensatzes sieht, intuitiv erkennt, in welche Richtung des Bogens er sich weiterbewegen muss. Sind die Zeichen des Zeichensatzes beispielsweise auf einem Kreisring angeordnet, so ist es für eine intuitive Bedienung vielfach ausreichend, wenn nur ein Teil des Kreisrings, nämlich ein Kreisringabschnitt des Zeichensatzes, tatsächlich angezeigt wird. Alternativ dazu kann der Zeichensatz feststehend angezeigt werden und durch die Betätigung der Anwahleinrichtung wird der bewegliche Anwahlfokus relativ über die Zeichen des feststehenden Zeichensatzes bewegt. Bei Anzeige nur eines Kreisringabschnittes ist es denkbar, dass jeweils ein konfigurierbarer Puffer von Zeichen vor und hinter dem Anwahlfokus definiert wird. Kommt der Anwahlfokus an die Grenzen des angezeigten Teils des Zeichensatzes, so wird der angezeigte Teil des Zeichensatzes um ein oder mehrere Zeichen weiterbewegt, um wieder eine ausreichende Anzahl von Zeichen vor und hinter dem Anwahlfokus anzeigen zu können. So kann sichergestellt werden, dass der Nutzer bei Bewegung des Anwahlfokus immer das oder die nächsten Zeichen auf dem Kreisringabschnitt erkennen kann.

Der jeweils angezeigte Teil des Zeichensatzes bzw. die Positionierung der angezeigten Zeichen des Zeichensatzes kann dabei in Abhängigkeit des jeweils angewählten Zeichens verändert werden. Damit ist gewährleistet, dass zumindest die jeweils unmittelbar benachbarten Zeichen zum aktuell angewählten Zeichen angezeigt werden.

Die Eingabe von Zeichenketten kann zusätzlich dadurch vereinfacht werden, dass die Kette der bereits ausgewählten Zeichen mit in einer Datenbank gespeicherten Zeichenketten, insbesondere mit in einem Navigationsgerät gespeicherten Ortsnamen, verglichen wird. Diese so genannten "Smart-Speller" sorgen dann dafür, dass nur noch die Zeichen des Zeichensatzes angewählt werden, die einer der in der Datenbank vorhandenen Zeichenketten entsprechen, und somit automatisch sinnlose Eingaben ausgeschlossen sind. Üblicherweise werden die nicht anwählbaren Zeichen dann ausgegraut oder anders visuell deaktiviert. Es können allerdings die nicht anwählbaren Zeichen auch komplett angezeigt werden.

Alternativ bzw. additiv dazu können auch so genannte Auto-Vervollständigungsroutinen in das erfindungsgemäße Verfahren integriert werden. Bei diesen Auto-Vervollständigungsroutinen wird die Kette der bereits angewählten Zeichen mit Zeichenketten in einer Datenbank, beispielsweise mit im Navigationsgerät gespeicherten Ortsnamen, verglichen. Sobald sich eine ausreichende Übereinstimmung zwischen den gespeicherten und den ausgewählten Zeichen ergibt, werden diese in der Datenbank gespeicherten Zeichenketten selektiert und automatisch angezeigt.

In den Zeichnungen sind verschiedene Ausführungsformen der Erfindung schematisch dargestellt und werden nachfolgend beispielhaft erläutert.

Es zeigen:
- **Fig. 1**: ein Navigationsgerät mit elektronischer Anzeigeeinrichtung bei Darstellung eines ersten Zeichensatzes in schematisierter Ansicht von oben;
- **Fig. 2**: das Navigationsgerät gemäß **Fig. 1** bei Anzeige des ersten Zeichensatzes in einem modifizierten Anzeigemodus;
- **Fig. 3**: das Navigationsgerät gemäß **Fig. 2** im gleichen Anzeigemodus bei veränderter Lage des Zeichensatzes;
- **Fig. 4**: das Navigationsgerät gemäß **Fig. 1** bei Anzeige eines zweiten Zeichensatzes;
- **Fig. 5**: das Navigationsgerät gemäß **Fig. 1** bei gleichzeitiger Anzeige des ersten und zweiten Zeichensatzes;
- **Fig. 6**: das Navigationsgerät gemäß **Fig. 1** bei Anzeige des ersten Zeichensatzes in einem weiteren Anzeigemodus;
- **Fig. 7**: das Navigationsgerät im Anzeigemodus gemäß **Fig. 6** bei Anwahl eines anderen Zeichens;
- **Fig. 8**: das Navigationsgerät im Anzeigemodus gemäß **Fig. 7** bei Anwahl eines anderen Zeichens;
- **Fig. 9**: das Navigationsgerät gemäß **Fig. 1** bei Anzeige des ersten Zeichensatzes in einem weiteren Anzeigemodus;
- **Fig. 10**: das Navigationsgerät im Anzeigemodus gemäß **Fig. 9** bei Anwahl eines anderen Zeichens;
- **Fig. 11**: das Navigationsgerät gemäß **Fig. 1** bei Anzeige eines weiteren Zeichensatzes.

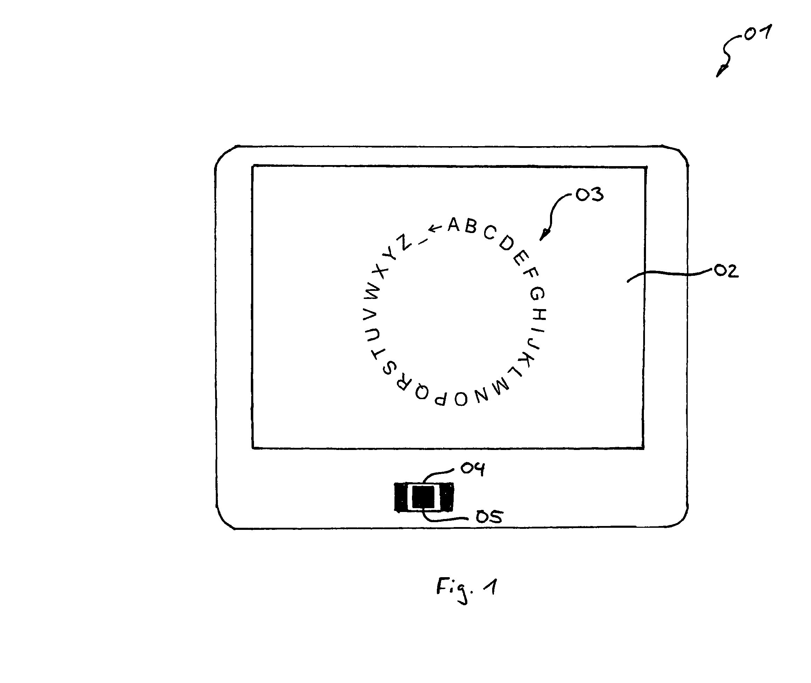

**Fig. 1** zeigt ein Navigationsgerät 01 mit einer Anzeigeeinrichtung 02, beispielsweise einem LCD-Display. An der Anzeigeeinrichtung 02 kann eine virtuelle Tastatur mit einem ersten Zeichensatz 03 angezeigt werden. Der Zeichensatz 03 umfasst dabei das Alphabet in alphabetischer Reihenfolge von A bis Z, das Leerzeichen und ein pfeilförmiges Zeichen für die Löschfunktion. Die einzelnen Zeichen des Zeichensatzes 03 werden dabei so dargestellt, dass sie auf einer geschlossenen Kreislinie liegend angeordnet sind. Außerdem bilden die Zeichen des Zeichensatzes 03 eine geschlossene Ringstruktur, bei der das erste Zeichen des Zeichensatzes, nämlich das A, neben dem letzen Zeichen des Zeichensatzes, nämlich dem pfeilförmigen Zeichen für die Löschfunktion, liegt.

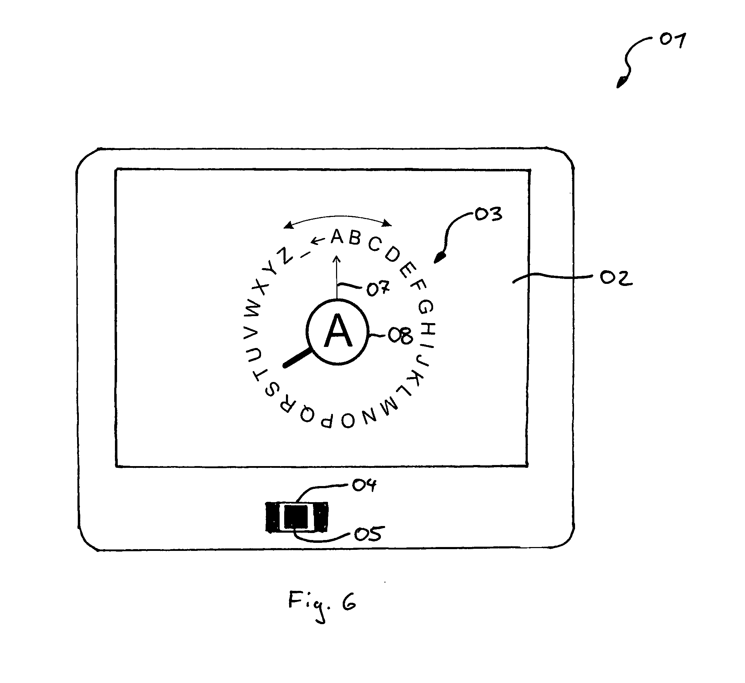

Zur Selektion der einzelnen Zeichen des Zeichensatzes 03 bei der Eingabe von Zeichenketten, insbesondere bei der Eingabe von Zieldaten, dienen ein Wippschalter 04 und ein Drucktaster 05. Die Verfahrensweise bei der Selektion einzelner Zeichen aus dem Zeichensatz 1 wird später anhand der **Fig. 6** bis **10** näher erläutert.

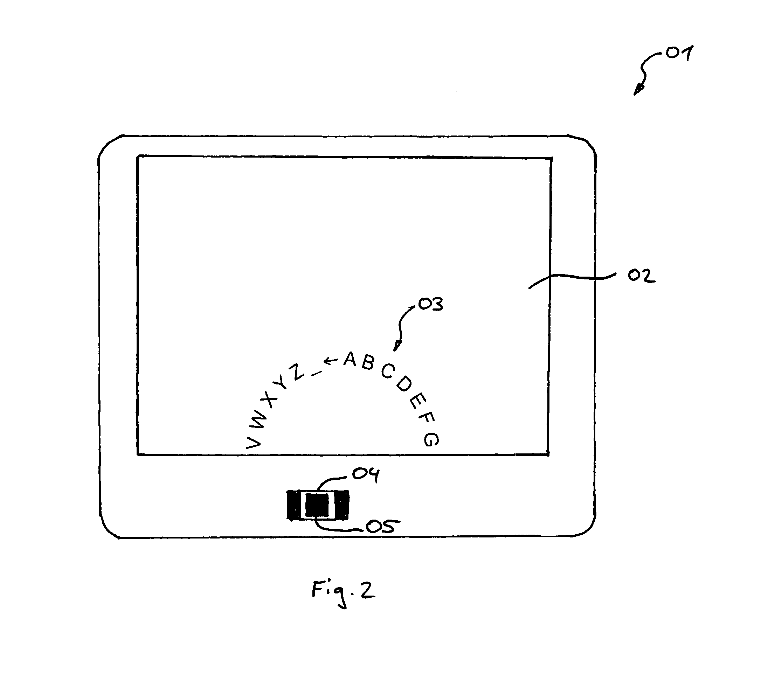

**Fig. 2** zeigt das Navigationsgerät 01 bei Anzeige des Zeichensatzes 03 in einem modifizierten Anzeigemodus. In diesem Anzeigemodus wird jeweils nur die Hälfte des Zeichensatzes 03 halbkreisförmig angezeigt. Abhängig von dem jeweils angewählten Zeichen des Zeichensatzes 03 verändert sich die Lage des angezeigten Zeichensatzes 03. Bei Anwahl des Zeichens A, wie in **Fig. 2** dargestellt, werden die rechts und links zum A benachbarten Zeichen im Halbkreis angezeigt.

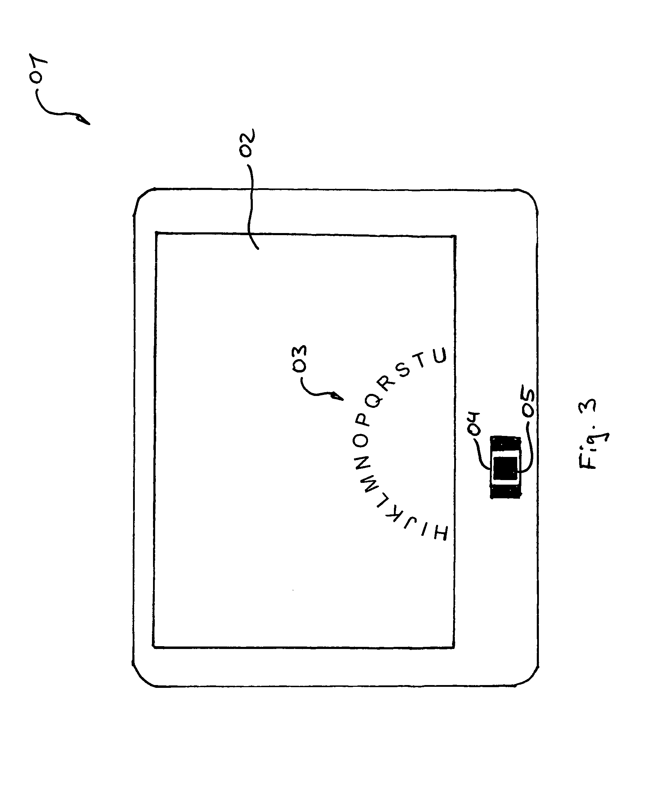

Wird, wie in **Fig. 3** dargestellt, das Zeichen O angewählt, werden dagegen alle dem O benachbarten Zeichen im Halbkreis dargestellt.

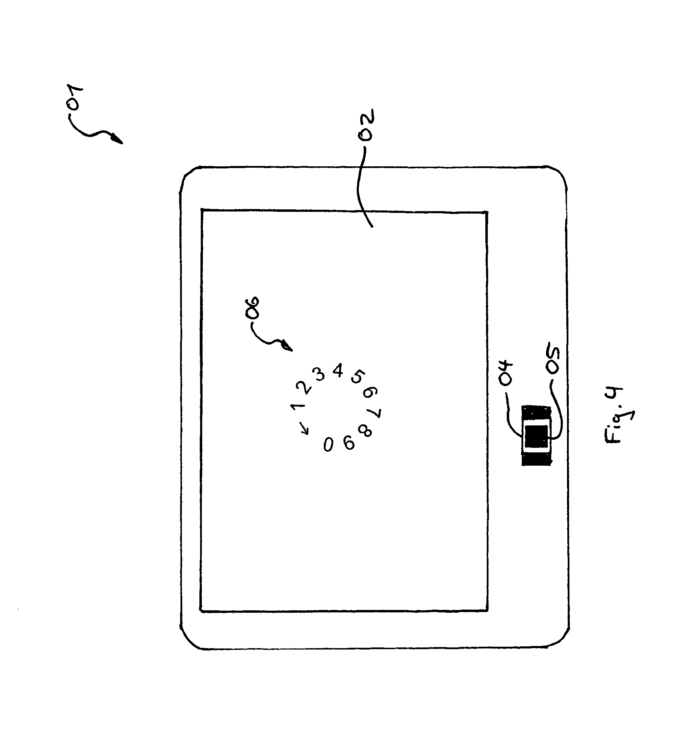

**Fig. 4** zeigt das Navigationsgerät 01 bei Anzeige eines zweiten Zeichensatzes 06 an der Anzeigeeinrichtung 02. Der zweite Zeichensatz 06 umfasst die arabischen Ziffern von 0 bis 9 und das Zeichen für die Löschfunktion.

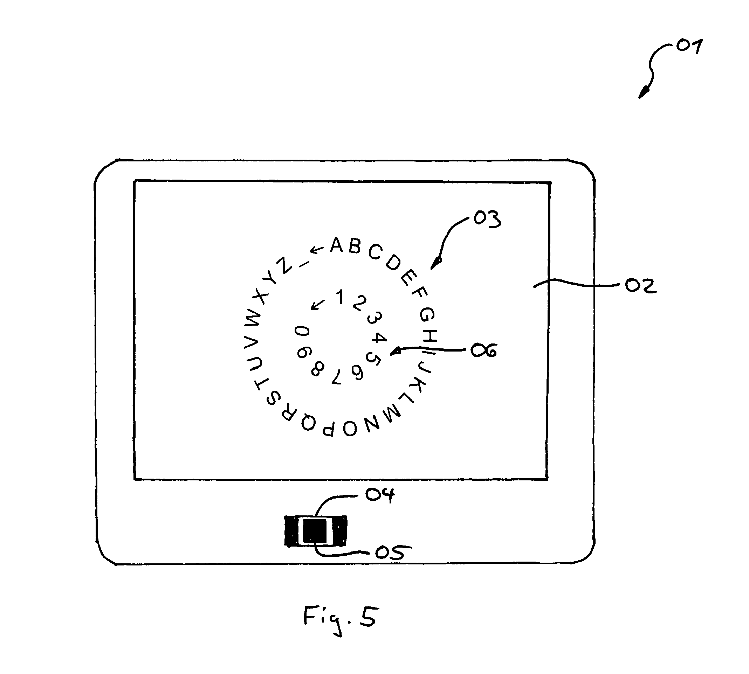

**Fig. 5** zeigt das Navigationsgerät 01 in einem weiteren Anzeigemodus. In diesem Anzeigemodus werden die Zeichensätze 03 und 06 gleichzeitig in der Anordnung als konzentrische Kreise dargestellt. Die Umschaltung zwischen den beiden Zeichensätzen 03 und 06 kann dabei beispielsweise durch eine entsprechende Tastenkombination der Schalter 04 und 05 erfolgen.

Anhand der Darstellungen in den **Fig. 6****,** **7** und **8** soll nachfolgend die Eingabe einer Zeichenkette, nämlich des Ortsnamen Ansbach, erläutert werden. Bei dem in **Fig. 6** bis **Fig. 8** dargestellten Anzeigemodus ist ein feststehender Anwahlfokus vorgesehen, der sich jeweils am höchsten Punkt der vom Zeichensatz 03 gebildeten Kreislinie befindet und durch einen Signalpfeil 07 symbolisiert wird. Das Zeichen im Anwahlfokus, bei der in **Fig. 6** dargestellten Anzeige das A, gilt als angewählt und wird zur Verdeutlichung dieser Anwahl im Mittelpunkt des Kreisrings noch einmal vergrößert dargestellt. Zur Verdeutlichung dieser Vergrößerung ist ein Lupensymbol 08 vorgesehen. Soll der Ortsname Ansbach eingegeben werden, wird zunächst das A in den Anwahlfokus bewegt. Dazu werden die Taster des Wippschalters 04 gedrückt, wobei sich beim Druck auf die linke Taste des Wippschalters 04 der Zeichensatz 03 entgegen dem Uhrzeigersinn dreht und beim Druck auf die rechte Taste des Wippschalters 04 sich der Zeichensatz 03 im Uhrzeigersinn dreht. Sobald sich das A im Anwahlfokus befindet, wie in **Fig. 6** dargestellt, kann das A durch Druck auf den Drucktaster 05 ausgewählt und zur Weiterverarbeitung übergeben werden.

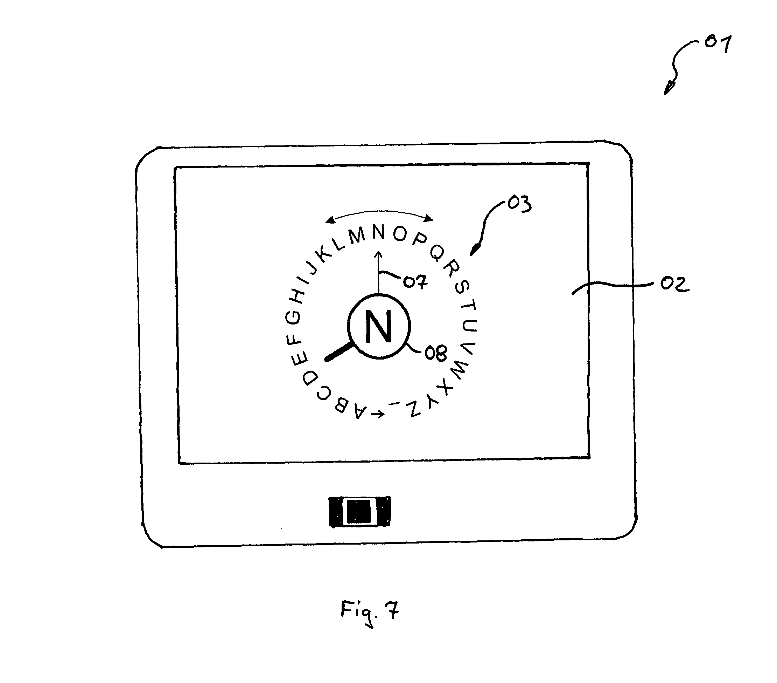

Anschließend wird in **Fig. 7** durch Betätigung des Wippschalters 04 der Zeichensatz 03 so lange gedreht, bis sich das N im Anwahlfokus befindet, und dieses wird durch Druck auf den Drucktaster 05 ausgewählt.

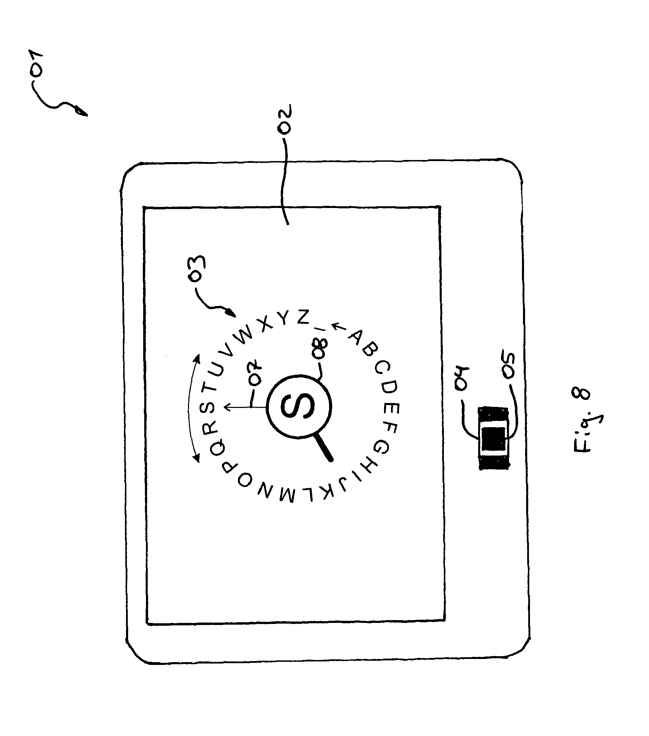

Anschließend wird, wie in **Fig. 8** dargestellt, das S in den Anwahlfokus gebracht und dieses ausgewählt. Sobald alle Buchstaben des Zielortes Ansbach auf diese Weise ausgewählt sind, kann die Zeichenkette zur Weiterverarbeitung übernommen und entsprechende Verarbeitungsroutinen können gestartet werden.

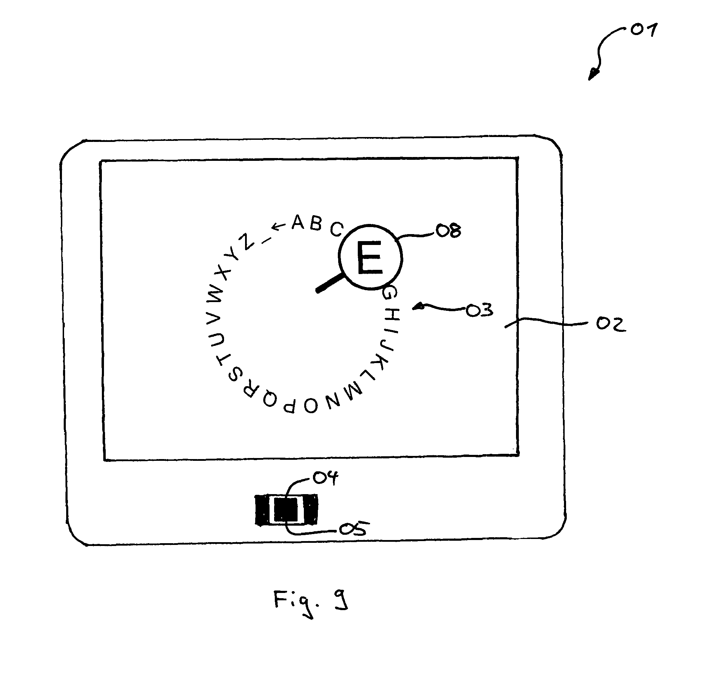

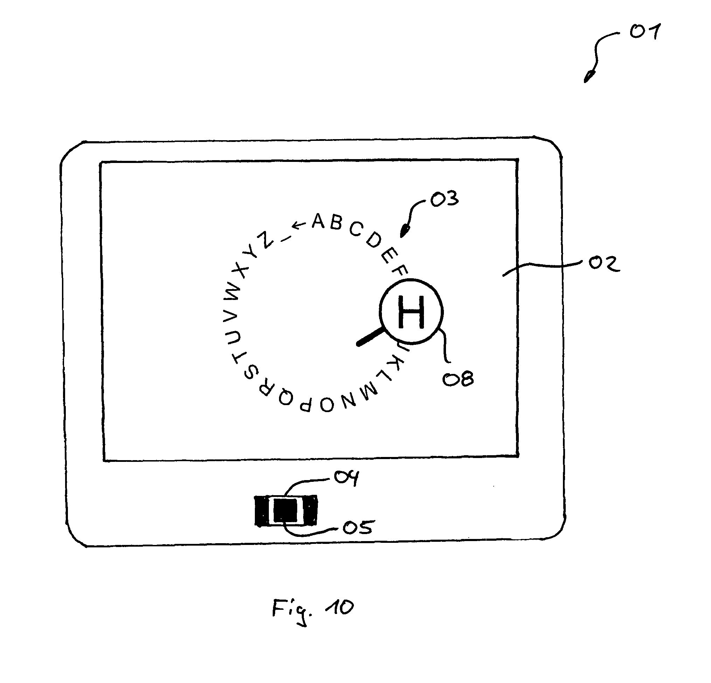

**Fig. 9** und **Fig. 10** stellen einen alternativen Anzeigemodus dar. Bei diesem Anzeigemodus wird der Zeichensatz 03 feststehend dargestellt und der durch das Lupensymbol 08 symbolisierte Anwahlfokus durch Betätigung des Wippschalters 04 über die Zeichen des feststehenden Zeichensatzes 03 bewegt.

Um die in **Fig. 10** dargestellte Anzeige zu erhalten, wird die rechte Taste des Wippschalters 04 dreimal gedrückt und auf diese Weise das Lupensymbol 08 um drei Zeichen im Uhrzeigersinn verschoben.

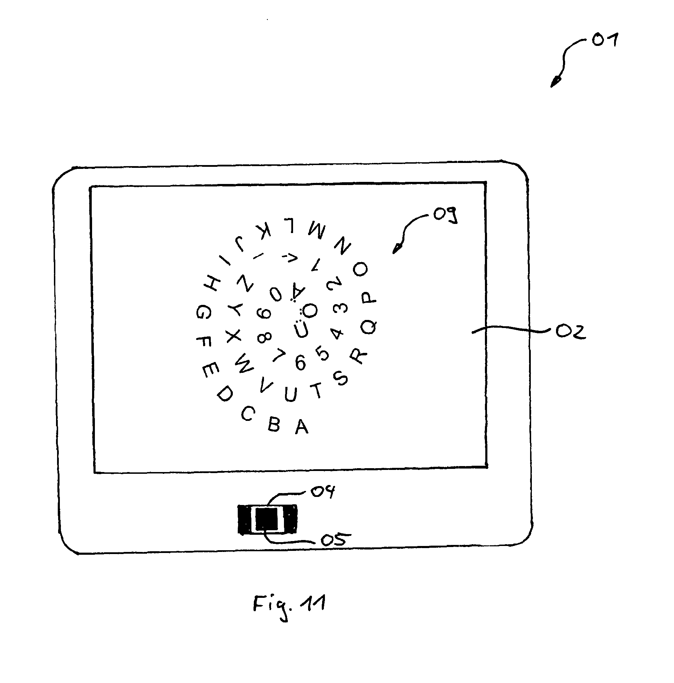

**Fig. 11** zeigt das Navigationsgerät 01 bei Anzeige eines Zeichensatzes 09, der das Alphabet, die arabischen Ziffern und verschiedene Sonderzeichen enthält. Der Zeichensatz 09 ist dabei auf einer Spirallinie angeordnet, was eine entsprechend höhere Ausnutzung des Raums auf der Anzeigeeinrichtung 02 ermöglicht.

## Patentansprüche

1. Elektronische Anzeigeeinrichtung (02) zur Anzeige mehrerer Zeichen eines Zeichensatzes (03, 06, 09), insbesondere zur Anzeige von Buchstaben und/oder Ziffern,
**dadurch gekennzeichnet,**
**dass** die an der Anzeigeeinrichtung (02) angezeigten Zeichen auf einer gekrümmten Bogenlinie angeordnet sind.

2. Anzeigeeinrichtung nach Anspruch 1,
**dadurch gekennzeichnet,**
**dass** die gekrümmte Bogenlinie einen Kreisbogenabschnitt, insbesondere eine geschlossene Kreislinie, bildet.

3. Anzeigeeinrichtung nach Anspruch 1,
**dadurch gekennzeichnet,**
**dass** die gekrümmte Bogenlinie eine Spirallinie bildet.

4. Anzeigeeinrichtung nach einem der Ansprüche 1 bis 3,
**dadurch gekennzeichnet,**
**dass** zumindest ein Zeichen des Zeichensatzes (03, 06, 09) durch Betätigen einer Anwahleinrichtung (04) angewählt werden kann.

5. Anzeigeeinrichtung nach Anspruch 4,
**dadurch gekennzeichnet,**
**dass** das jeweils angewählte Zeichen des Zeichensatzes (03, 06, 09) hervorgehoben, insbesondere vergrößert, in einem Lupensymbol (08), angezeigt wird.

6. Anzeigeeinrichtung nach Anspruch 4 oder 5,
**dadurch gekennzeichnet,**
**dass** die Anwahleinrichtung in der Art eines Wippenschalters (04) oder in der Art eines Joysticks ausgebildet ist.

7. Anzeigeeinrichtung nach einem der Ansprüche 4 bis 6,
**dadurch gekennzeichnet,**
**dass** angewählte Zeichen des Zeichensatzes (03, 06, 09) durch Betätigen einer Auswahleinrichtung (05) zur Weiterverarbeitung ausgewählt werden können.

8. Anzeigeeinrichtung nach Anspruch 7,
**dadurch gekennzeichnet,**
**dass** die Anwahleinrichtung und die Auswahleinrichtung kombiniert in der Art eines Schalters mit Dreh-Drück-Mechanismus ausgebildet sind.

9. Anzeigeeinrichtung nach einem der Ansprüche 1 bis 8,
**dadurch gekennzeichnet,**
**dass** zumindest zwei Zeichensätze (03, 06) vorgesehen sind, wobei durch Betätigen einer Umschalteinrichtung zwischen den verschiedenen Zeichensätzen (03, 06) umgeschaltet werden kann.

10. Anzeigeeinrichtung nach einem der Ansprüche 1 bis 9,
**dadurch gekennzeichnet,**
**dass** ein erster Zeichensatz (03) die Buchstaben des Alphabets, insbesondere geordnet in alphabetischer Reihenfolge, umfasst und/oder ein zweiter Zeichensatz (06) die Ziffern der arabischen Zahlen, insbesondere der Größe nach geordnet, umfasst und/oder ein dritter Zeichensatz Sonderzeichen, insbesondere Umlaute, umfasst.

11. Anzeigeeinrichtung nach einem der Ansprüche 1 bis 10,
**dadurch gekennzeichnet,**
**dass** zumindest zwei Zeichensätze (03, 06, 09) jeweils gleiche Zeichen, insbesondere ein Leerzeichen und/oder ein Zeichen für die Löschfunktion und/oder ein Punktzeichen und/oder @-Zeichen und/oder ein Returnzeichen, umfassen.

12. Anzeigeeinrichtung nach einem der Ansprüche 1 bis 11,
**dadurch gekennzeichnet,**
**dass** ein Zeichensatz jeweils ein gleiches Zeichens, insbesondere ein Leerzeichen und/oder ein Zeichen für die Löschfunktion und/oder ein Punktzeichen und/oder @-Zeichen und/oder ein Returnzeichen, mehrfach umfasst.

13. Anzeigeeinrichtung nach einem der Ansprüche 1 bis 12,
**dadurch gekennzeichnet,**
**dass** verschiedene Zeichensätze (03, 06) gleichzeitig, insbesondere angeordnet auf konzentrischen Kreisen, angezeigt werden können.

14. Anzeigeeinrichtung nach einem der Ansprüche 1 bis 13,
**dadurch gekennzeichnet,**
**dass** die Anzeigeeinrichtung (02) Bestandteil eines Navigationsgeräts ist, wobei die Anzeigeeinrichtung (02) insbesondere zur Auswahl und/oder Eingabe eines Ziels eingesetzt werden kann.

15. Anzeigeeinrichtung nach einem der Ansprüche 1 bis 14,
**dadurch gekennzeichnet,**
**dass** die Anzeigeeinrichtung eine berührungssensitive Oberfläche aufweist, wobei durch Berührung der Oberfläche im Bereich eines angezeigten Zeichens dieses Zeichen ausgewählt werden kann.

16. Verfahren zum Betrieb einer elektronischen Anzeigeeinrichtung (02) zur Anzeige mehrerer Zeichen eines Zeichensatzes (03, 06, 09), insbesondere zur Anzeige von Buchstaben und/oder Ziffern, wobei zumindest ein Zeichen des Zeichensatzes durch Betätigen einer Anwahleinrichtung (04) angewählt und durch Betätigen einer Auswahleinrichtung (05) zur Weiterverarbeitung ausgewählt werden kann,
**dadurch gekennzeichnet,**
**dass** die Zeichen auf einer gekrümmten Bogenlinie angeordnet und angezeigt werden.

17. Verfahren nach Anspruch 16,
**dadurch gekennzeichnet,**
**dass** die Zeichen auf einem Kreisbogenabschnitt liegend, insbesondere einer geschlossenen Kreislinie liegend, angezeigt werden.

18. Verfahren nach Anspruch 16,
**dadurch gekennzeichnet,**
**dass** die Zeichen auf einer Spirallinie liegend angezeigt werden.

19. Verfahren nach einem der Ansprüche 16 bis 18,
**dadurch gekennzeichnet,**
**dass** ein Anwahlfokus (08) vorhanden ist, der das jeweils angewählte Zeichen des Zeichensatzes (03) markiert, wobei durch die Betätigung der Anwahleinrichtung (04) der Anwahlfokus (08) relativ über die Zeichen des Zeichensatzes (03) bewegt wird.

20. Verfahren nach Anspruch 19,
**dadurch gekennzeichnet,**
**dass** das jeweils angewählte Zeichen hervorgehoben, insbesondere vergrößert, in einem Lupensymbol (08) angezeigt wird.

21. Verfahren nach Anspruch 19 oder 20,
**dadurch gekennzeichnet,**
**dass** das jeweils angewählte Zeichen zusätzlich ein zweites Mal, insbesondere in der Mitte des kreisförmig angezeigten Zeichensatzes (03), angezeigt wird.

22. Verfahren nach einem der Ansprüche 19 bis 21,
**dadurch gekennzeichnet,**
**dass** der Anwahlfokus (08) feststehend angezeigt wird und durch die Betätigung der Anwahleinrichtung (04) die Zeichen des Zeichensatzes (03) relativ zum feststehenden Anwahlfokus (08) gemeinsam bewegt werden.

23. Verfahren nach Anspruch 22,
**dadurch gekennzeichnet,**
**dass** der Anwahlfokus feststehend angezeigt wird und durch die Betätigung der Anwahleinrichtung die Zeichen aller konzentrisch angeordneten Zeichensätze relativ zum feststehenden Anwahlfokus gemeinsam bewegt werden.

24. Verfahren nach Anspruch 22,
**dadurch gekennzeichnet,**
**dass** der Anwahlfokus feststehend angezeigt wird und durch die Betätigung der Anwahleinrichtung die Zeichen des mit der Umschalteinrichtung ausgewählten, insbesondere konzentrisch angeordneten Zeichensatzes relativ zum feststehenden Anwahlfokus gemeinsam bewegt werden, wobei die anderen, mit der Umschalteinrichtung nicht ausgewählten, insbesondere konzentrisch angeordneten Zeichensätze, feststehend angezeigt werden.

25. Verfahren nach einem der Ansprüche 19 bis 24,
**dadurch gekennzeichnet,**
**dass** der Zeichensatz (03) feststehend angezeigt wird und durch die Betätigung der Anwahleinrichtung (04) der Anwahlfokus (08) relativ über die Zeichen des feststehenden Zeichensatzes (03) bewegt wird.

26. Verfahren nach einem der Ansprüche 19 bis 25,
**dadurch gekennzeichnet,**
**dass** durch die Betätigung der Anwahleinrichtung (04) das im Zeichensatz (03, 06, 09) jeweils unmittelbar benachbarte oder eine bestimmte Anzahl vom Zeichen entfernt liegende Zeichen angewählt wird.

27. Verfahren nach einem der Ansprüche 16 bis 26,
**dadurch gekennzeichnet,**
**dass** die Zeichen des Zeichensatzes (03, 06) eine geschlossene Ringstruktur bilden, wobei das erste Zeichen des Zeichensatzes (03, 06) in der Ringstruktur dem letzten Zeichen des Zeichensatzes (03, 06) benachbart ist.

28. Verfahren nach einem der Ansprüche 16 bis 27,
**dadurch gekennzeichnet,**
**dass** nur ein Teil der Zeichen des Zeichensatzes (03) angezeigt wird, insbesondere dass mehrere auf einem Kreisringabschnitt angeordnete Zeichen angezeigt werden, die zu einem auf einem geschlossenen Kreisring angeordneten Zeichensatz (03) gehören.

29. Verfahren nach Anspruch 28,
**dadurch gekennzeichnet,**
**dass** der angezeigte Teil der Zeichen des Zeichensatzes (03) und/oder die Positionierung der angezeigten Zeichen des Zeichensatzes (03) in Abhängigkeit des angewählten Zeichens verändert werden.

30. Verfahren nach Anspruch 29,
**dadurch gekennzeichnet,**
**dass** an den Enden des angezeigten, insbesondere kreisringabschnittsförmig angeordneten Teils der Zeichen jeweils ein Darstellungspuffer vorgesehen ist, wobei bei Anordnung des Anwahlfokus im Darstellungspuffer der angezeigte, kreisringabschnittsförmig angeordnete Teil der Zeichen um ein oder mehrere Zeichen in Gegenrichtung bewegt angezeigt wird.

31. Verfahren nach einem der Ansprüche 16 bis 30,
**dadurch gekennzeichnet,**
**dass** die Kette bereits ausgewählter Zeichen mit einer Zeichenkette in einer Datenbank, insbesondere mit in einem Navigationsgerät (01) gespeicherten Ortsnamen, verglichen wird, wobei anschließend nur noch die Zeichen des Zeichensatzes angewählt werden können, die einer in der Datenbank vorhandenen Zeichenkette entsprechen.

32. Verfahren nach einem der Ansprüche 16 bis 31,
**dadurch gekennzeichnet,**
**dass** die Kette bereits ausgewählter Zeichen mit einer Zeichenkette in einer Datenbank, insbesondere mit in einem Navigationsgerät (01) gespeicherten Ortsnamen, verglichen wird, wobei automatisch alle in der Datenbank gespeicherten Zeichenketten angezeigt werden, die eine ausreichende Übereinstimmung mit der Kette der bereits ausgewählten Zeichen aufweisen.
